# EUROPEAN PATENT APPLICATION

(11) **EP 3 476 361 A1**
(43) Date of publication of application: **01.05.2019**
(21) Application number: 17197980.0
(22) Date of filing: 24.10.2017
(51) Int. Cl.: A61C 7/00, A61C 7/08

(54) **A METHOD FOR FACILITATING A TOOTH REPOSITIONING DENTAL TREATMENT**

(71) Applicant: GuideMia Biotechnologies (Shanghai) Ltd., Shanghai (CN)
(72) Inventor: GAO, Fei, Buena Park, CA 90620 (US)
(74) Representative: London IP Ltd

(57) **Abstract**

A method for facilitating a tooth repositioning dental treatment includes: receiving a CT scan of a patient's oral dental structure, receiving an optical scan of the patient's oral dental structure, aligning the CT scan and the optical scan, establishing an initial model of the patient's oral dental structure based on the CT scan and the optical scan, simulating tooth movements to produce a final model of the patient's oral dental structure after the tooth repositioning dental treatment, generating a plurality of models of the patient's oral dental structure representing successive tooth movements from the initial model to the final model, and preparing dental aligners based on the plurality of models of the patient's oral dental structure.

## Description

### Field of the Invention

The present invention is related generally to the field of orthodontics. More particularly, the present invention is related to a method for facilitating a tooth repositioning dental treatment.

### Discussion of the Related Art

Repositioning teeth is conventionally accomplished by wearing "braces." Attaching the braces to a patient's teeth is a tedious and time consuming task. Consequently, conventional orthodontic treatment is expensive. Repositioning teeth is also accomplished by wearing "aligners." The aligners are configured to be placed successively on a patient's teeth and to incrementally reposition the teeth from an initial tooth arrangement, through several intermediate tooth arrangements, and to a final tooth arrangement.

The aligners are essentially a series of shells that are designed based on tooth crown data and derived from the tooth positions. In an oral dental structure, there are four components: tooth crowns, tooth roots, soft tissues and the articulation of lower jaw and upper jaw. The aligners are designed based on tooth crown data only, and thus do not represent a patient's anatomy. The aligners often do not fit the intermediate tooth arrangements. Therefore, the aligners are often required to be redesigned and reproduced to accomplish the reposition treatment.

There is a need for a tooth reposition treatment method where the aligners are designed based on tooth crowns, tooth roots, soft tissues and the articulation of lower jaw and upper jaw, and the aligners correctly represent the patent's anatomy.

### SUMMARY OF THE INVENTION

A method for facilitating a tooth repositioning dental treatment includes receiving a CT scan of a patient's oral dental structure, receiving an optical scan of the patient's oral dental structure, aligning the CT scan and the optical scan, establishing an initial model of the patient's oral dental structure based on the CT scan and the optical scan, simulating tooth movements to produce a final model of the patient's oral dental structure after the tooth repositioning dental treatment, generating a plurality of models of the patient's oral dental structure representing successive tooth movements from the initial model to the final model, and preparing dental aligners based on the plurality of models of the patient's oral dental structure.

The method further includes segmenting tooth data from the CT scan to obtain segmented CT scan. The segmented CT scan includes tooth crown data and tooth root data.

The method further includes segmenting crown data from the optical scan to obtain segmented optical scan. The segmented optical scan includes soft tissue data.

In the method, the establishing initial model of the patient's oral dental structure is based on the segmented CT scan and the segmented optical scan.

In the method, the CT scan of the patient's oral dental structure is a CT scan of the patient's oral dental structure in a first jaw opening angle, the optical scan of the patient's oral dental structure is an optical scan of the patient's oral dental structure in a second jaw opening angle, and the difference between the first jaw opening angle and the second jaw opening angle is 1 degrees or more.

The method further includes creating a virtual articulation based on the CT scan, the optical scan, or both. The simulation of tooth movements is based on the adjustment of the virtual articulation and individual tooth movement.

The method further includes generating an axis of a temporomandibular joint of the patient's oral dental structure from the CT scan, the optical scan, or both, and applying the axis in creating the virtual articulation.

The method further includes segmenting tooth data from the CT scan to obtain segmented CT scan, segmenting crown data from the optical scan to obtain segmented optical scan, and creating a virtual articulation based on the segmented CT scan and the segment optical scan. The segmented CT scan includes tooth crown data and tooth root data. The segmented optical scan includes soft tissue data. The establishing initial model of the patient's oral dental structure is based on the segmented CT scan, the segmented optical scan, or both. The simulation of tooth movements is based on the adjustment of the virtual articulation and individual tooth movement.

In the method, the CT scan and optical scan data are displayed both in 3D images and 2D images, the 3D images and 2D images include area of jaw bone data surrounding the teeth, and the tooth repositioning dental treatment is evaluated against the area of jaw bone data surrounding the teeth.

In the method, a plurality of teeth can be considered and moved as a single entity in the tooth repositioning dental treatment.

A method for facilitating a tooth repositioning dental treatment includes receiving a scan of a patient's oral dental structure in a first jaw opening angle, receiving a scan of a patient's oral dental structure in a second jaw opening angle, aligning the scan of the first jaw opening angle and the scan of the second jaw opening angle, establishing an initial model of the patient's oral dental structure based on the scan of the first jaw opening angle and the optical scan of the second jaw opening angle, simulating tooth movements to produce a final model of the patient's oral dental structure after the tooth repositioning dental treatment, generating a plurality of models of the patient's oral dental structure representing successive tooth movements from the initial model to the final model, and preparing dental aligners based on the plurality of models of the patient's oral dental structure. The difference between the first jaw opening angle and the second jaw opening angle is 1 degree or more.

The method further includes segmenting tooth data from the scan of the first jaw opening angle to obtain segmented scan of the first jaw opening angle, and segmenting crown data from the scan of the second jaw opening angle to obtain segmented scan of the second jaw opening angle.

In the method, the establishing initial model of the patient's oral dental structure is based on the segmented scan of the first jaw opening angle, the segmented scan of the second jaw opening angle, or both.

The method further includes creating a virtual articulation based on the scan of the first jaw opening angle, the scan of second jaw opening angle, or both. The simulating tooth movements is based on the adjustment of the virtual articulation and individual tooth movement.

The method further includes generating an axis of a temporomandibular joint of the patient's oral dental structure from the scan of the first jaw opening angle, the scan of the second jaw opening angle, or both, and applying the axis in creating the virtual articulation.

The method further includes segmenting tooth data from the scan of the first jaw opening angle to obtain segmented scan of the first jaw opening angle, segmenting crown data from the scan of the second jaw opening angle to obtain segmented scan of the second jaw opening angle, and creating a virtual articulation based on the segmented scan of the first jaw opening angle, the segmented scan of the second jaw opening angle, or both. The establishing initial model of the patient's oral dental structure is based on the segmented scan of the first jaw opening angle, the segmented scan of the second jaw opening angle, or both. The simulating tooth movements is based on the virtual articulation.

In the method, the scan of the patient's oral dental structure is a CT scan or an optical scan.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1a shows the CT scan of a patient in 2D crosss section mode.
Figure 1b shows the CT scan of a patient in 3D mode.
Figure 2 shows a patient's oral dental structure in a jaw opening angle.
Figure 3 shows a patient's oral dental structure in a closed position.
Figure 4 shows a dental model of the patient's oral dental structure.

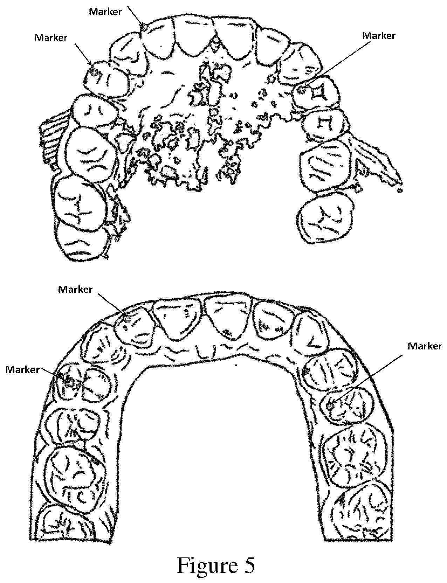

Figure 5 shows aligning the CT scan and the optical scan with ICP, where the three dots on each picture indicates the fiducial points that are used to match the two scans.
Figure 6 shows an optical scan that is aligned with a CT scan.
Figure 7 shows two different jaw opening angles generated from a virtual articulation based on the CT scan and optical scan with different jaw opening angles.
Figure 8 shows an axis of a temporomandibular joint of the patient's oral dental structure.
Figure 9 shows the segmentation of the tooth structure with threshold values such that only high density area is selected.
Figure 10 shows the segmentation of the tooth structure with threshold values such that a good area of the teeth is selected. A tool is used to further select the tooth of interest.
Figure 11 shows a resulted tooth model.
Figure 12 shows a boundary is defined for a tooth of interest, where the boundary is at the border between soft tissue and crown.
Figure 13 shows a boundary is defined for the tooth of interest, where both the crown and surrounding tissue is included.
Figure 14 shows the teeth have been all segmented from the model.
Figure 15 shows a tooth that is being moved. In the left side, the tooth, i.e., its crown and root, is moved with a positioning tool. In the right side, the crown is moved and the tissue is morphed.
Figure 16 shows a function that is used to define the displacement of a point on tissue area with respect to the distance between the point and the tooth boundary.
Figure 17 shows the movements of a tooth in a CT slice display.
Figure 18 shows an attachment designed to help move the tooth.
Figure 19a shows the shell model, aligner, and the tooth underneath the aligner. In Figure 19a the dotted line indicates the shell model, or aligner, the solid line indicates the tooth underneath the aligner. The deviation of the surfaces create forces to move the tooth as indicated by the arrows. Figure 19b shows an original tooth model, a tooth model with local deformation, an aligner made with this deformed model being applied onto the actual tooth, and the bump area that creates additional force to move the tooth.
Figure 20 shows that the aligner's geometry is not exact match of the combination of the teeth.

### DETAILED DESCRIPTION OF THE ILLUSTRATED EMBODIMENTS

Reference will now be made in detail to embodiments of the present invention, example of which is illustrated in the accompanying drawings.

The present invention provides a method for facilitating a tooth repositioning dental treatment. The method includes receiving a CT scan of a patient's oral dental structure, receiving an optical scan of the patient's oral dental structure, aligning the CT scan and the optical scan, establishing an initial model of the patient's oral dental structure based on the CT scan and the optical scan, simulating tooth movements to produce a final model of the patient's oral dental structure after the tooth repositioning dental treatment, generating a plurality of models of the patient's oral dental structure representing successive tooth movements from the initial model to the final model, and preparing dental aligners based on the plurality of models of the patient's oral dental structure.

A CT scan, also called X-ray computed tomography or computerized axial tomography scan, makes use of computer-processed combinations of many X-ray images taken from different angles to produce cross-sectional (tomographic) images (virtual "slices") of specific areas of a scanned object. Here, the scanned object is a patient's oral dental structure.

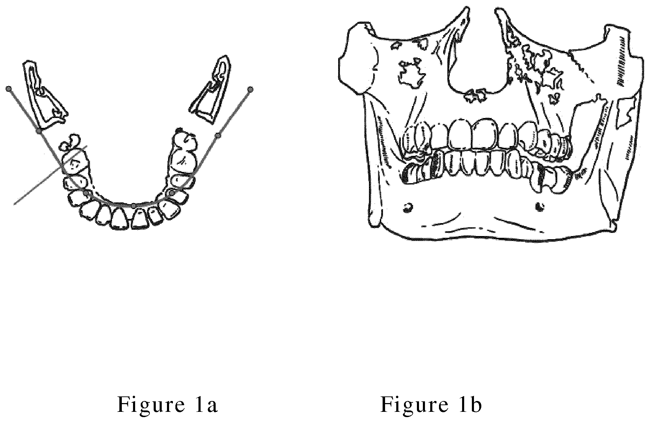

First a CT scan is obtained for a patient. The CT scan data is viewed in a computer system, and a 3D reconstruction is performed to show the CT slice data in a 3D space. Figure 1a shows the CT scan of a patient in 2D. Figure 1b shows the CT scan of a patient in 3D.

When the CT scan is obtained for both upper and lower jaw in one scan, the patient's jaws may have different positions. When the jaws are open, they are separated by some soft and light materials, such as a cotton pad, or with the jaw closed. To describe the position of the patient's jaws, a jaw opening angle will be used. The jaw opening angle is defined as the angle formed by the plane representing the patient's upper jaw and the plane representing the patient's lower jaw. The angle is considered as 0 when the jaws are completely closed.

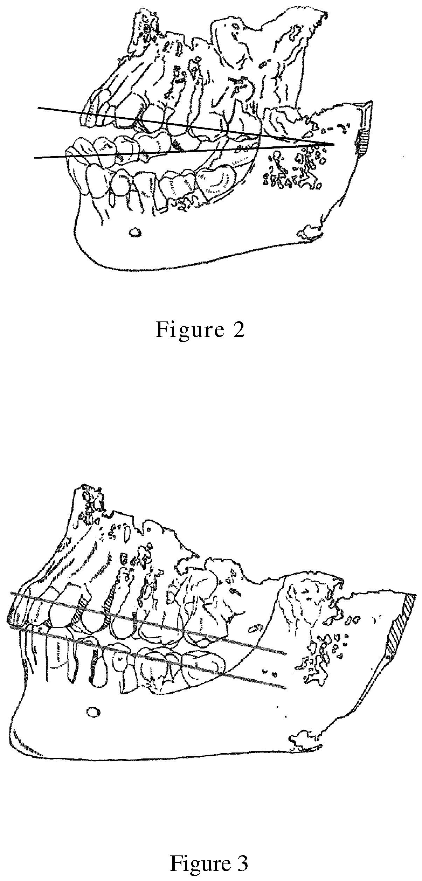

Figure 2 shows a patient's oral dental structure in a jaw opening angle of a. The jaw opening angle (a) can be 0 to 50 degrees. When the jaw opening angle (a) is 0 degree (the plane representing the patient's upper jaw being parallel to the plane representing the patient's lower jaw), the patient's oral dental structure is in a closed position. Figure 3 shows a patient's oral dental structure in a closed position.

The CT scan is obtained when the patient's jaws have a jaw opening angle (a). The jaw opening angle (a) can be 0 to 50 degrees. For example, the CT scan is obtained when the patient's jaws have a jaw opening angle of 0 degree, 1 degree, 5, degrees, 8 degrees, or 10 degrees.

Next, an optical scan of the patient's oral dental structure is obtained. One can use intra-oral scanner that acquires digital data directly by scanning the patient's teeth and gum. One can also make a dental model of the patient' oral dental structure, and then use any optical scanner to scan the model to obtain the digital model of the teeth and gum

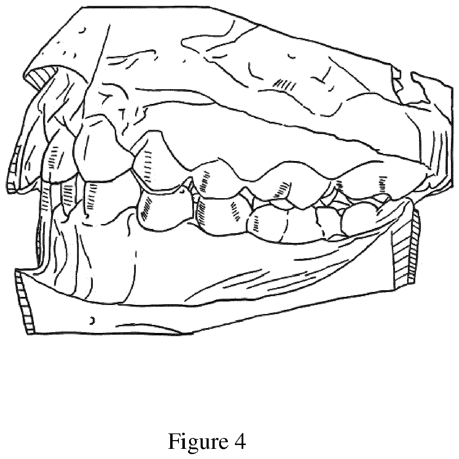

Similar to the CT scan, the optical scan is obtained. Figure 4 shows a dental model of the patient's oral dental structure. when the patient's jaws have a jaw opening angle (a). The jaw opening angle (a) can be 0 to 50 degrees. For example, the optical scan is obtained when the patient's jaws have a jaw opening angle of 0 degree, 1 degree, 5, degrees, 8 degrees, or 10 degrees.

Preferably, the optical scan is obtained when the patient's jaws have a jaw opening angle (a) that is different than the CT scan. Specifically, a CT scan is obtained when the patient's jaws have a first jaw opening angle, and an optical scan is obtained when the patient's jaws have a second jaw opening angle. The difference between the first jaw opening angle and the second jaw opening angle is 1 degree or more, 5 degrees or more, 8 degrees or more, or 10 degrees or more. For example, the first jaw opening angle is 0 degree, and the second jaw opening angle is 1 degree, 5, degrees, 8 degrees, or 10 degrees.

The optical scan can be one single digital file with two jaws, or one digital file for each. In case they are placed into single file, computer approaches can be used so that in a later stage they can be separated into two individual parts. In the remainder of the disclosure the optical scans will be referred to as two models or two files, with one file for one jaw. But this is not necessary to practice the present invention.

In the next step, a computer system will have a module to load both the CT data and the optical scan data and align them together.

The computer system will employ a registration approach based on point or surface patch matching for both of the jaws. Taking upper jaw as an example, the system will display both the CT data and the upper jaw model. An automatic approach or manual tool will be given to users to designate that locations (points or regions) from CT data is corresponding to those on the optical scan.

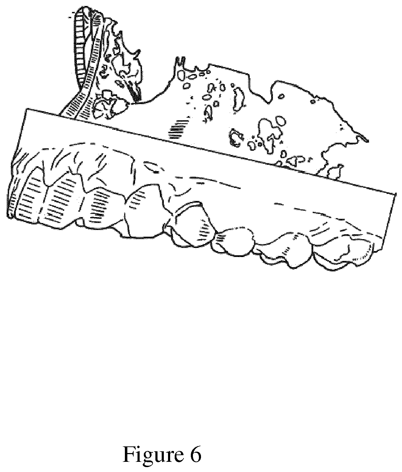

An algorithm such as "iterative closest point" (ICP) can be used to match the specified regions and thus a transformation will be created to move the optical data of the jaw to where the CT data is. Figure 6 shows aligning the CT scan and the optical scan with ICP.

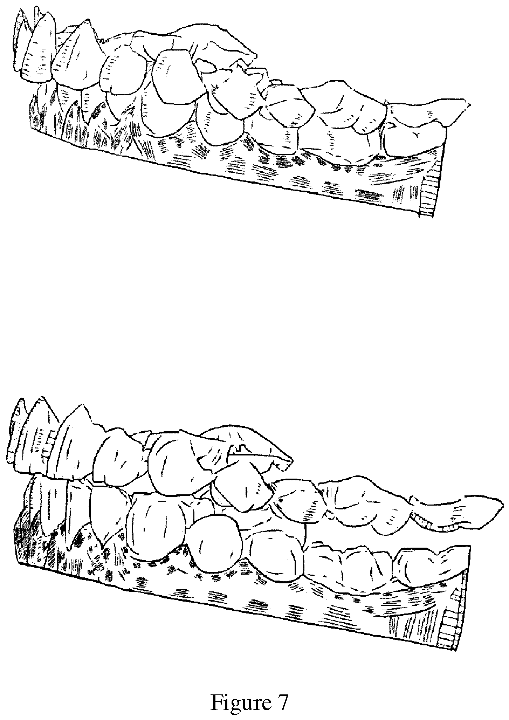

When the CT scan is obtained when the patient's jaws have a first jaw opening angle, the optical scan is obtained when the patient's jaws have a second jaw opening angle, and the difference between the first jaw opening angle and the second jaw opening angle is 1 degree or more, 5 degrees or more, 8 degrees or more, or 10 degrees or more, data sets for two jaws positions are acquired. This creates a virtual articulation of the two jaws. A software tool can be used to interpolate or extrapolate the positions of the articulation, then the opening and closing of the jaws can be simulated. Figure 7 shows a virtual articulation based on the CT scan and optical scan with different jaw opening angles.

When both the CT and optical scans are obtained with the same jaw opening angle, this virtual articulation cannot be established. In this situation, the temporomandibular joints is used to define the articulation of the jaws. One can designate a virtual axis by looking at the CT scan and identify the joints.

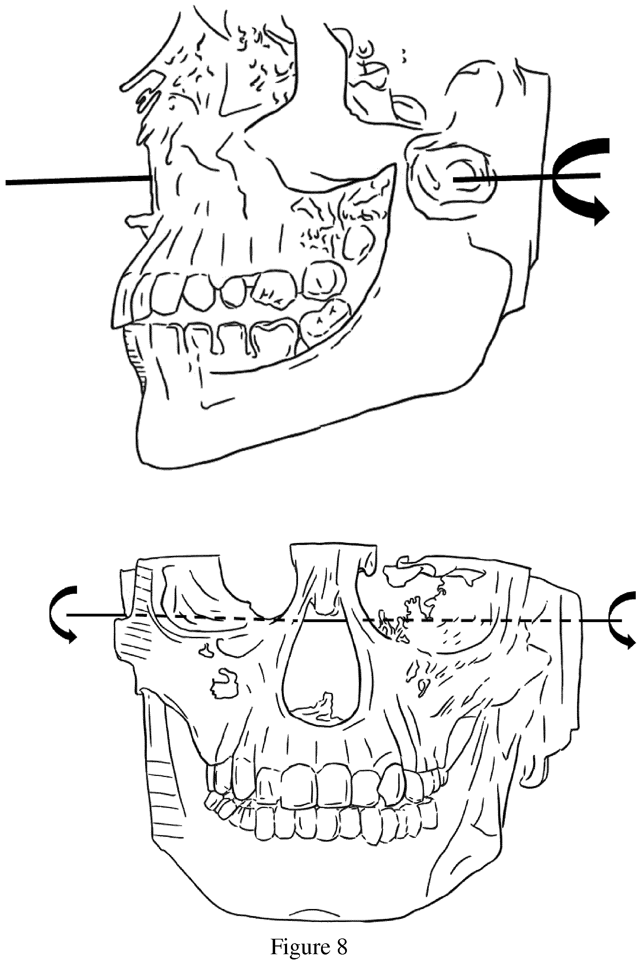

The movements of the lower jaw is very complex but can be simplified as the rotation about temporomandibular joints. With the CT scan and/or optical scan, an axis of a temporomandibular joint of the patient's oral dental structure can be established. The axis can then be applied in creating a virtual articulation. Figure 8 shows an axis of a temporomandibular joint of the patient's oral dental structure.

In the next step, the CT scan is processed to separate tooth roots. Image processing procedure is used to correlate the display of 3D model and 2D slices. Segmentation tools are used to create individual tooth root models from the CT dataset. A region of interest tool is deployed to create an area on the CT dataset corresponding to the teeth of interest. And tools are used to separate individual tooth, at least part of the crowns, from the CT data.

Two image windows are displayed in the computer system. The system comes with the thresholding tool to change the threshold of 2D views and update the 3D display accordingly. For individual tooth, a user can adjust the threshold so that the tooth root data is properly filtered. A segmentation or cutting tool is used to grab the pixels for one tooth or a tooth group from the CT data. The 3D pixels for the tooth data are the converted into 3D surface model represented by geometry data such as faces and points.

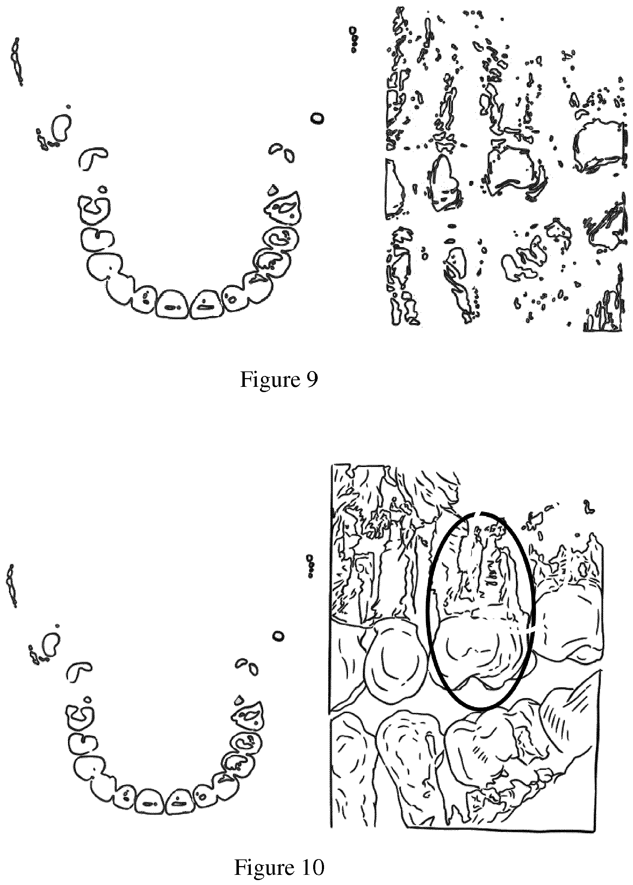

Figure 9 shows the segmentation of the tooth structure with threshold values such that only high density area is selected.

Figure 10 shows the segmentation of the tooth structure with threshold values such that a good area of the teeth is selected. A tool is used to further select the tooth of interest

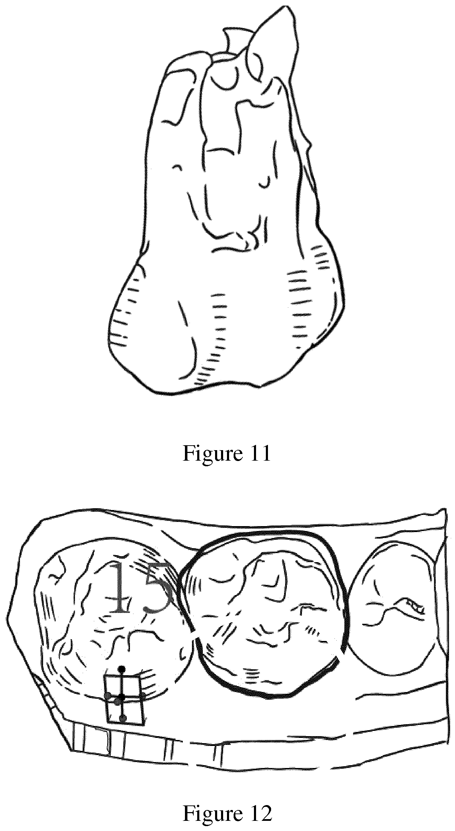

Figure 11 shows a resulted tooth model.

According the current tooth arrangement or the orthodontic treatment needs, users can create models for individual tooth roots, or multiple tooth roots in one operation. A plurality of operations are performed so as to obtain the entire tooth structure of the patient. Same operations may need to be applied on both lower jaw and lower jaw of a patient with the same CT dataset or different datasets.

Next the optical data of the jaws will be processed so that the crowns and soft tissue models can be obtained. Crowns may or may be separated individually or be separated as a group, similar to how CT data is segmented. For example, a user will just specify points surrounding two the crown boundary and the system will connect the points as a loop and select the area inside the loop as the crown model of underlying tooth/teeth.

It is not necessary to separate crowns all from the boundary between the crowns and soft tissue. The separation of the crowns from optical data may include segmenting crown area only or segmenting crown area and some surrounding soft tissue. There are two reasons: 1) the models or the optical scans may not produce a clear boundary of the crowns; 2) the users determine that it is helpful to move some tissue around together with the crowns. This will be also addressed in the tissue morphing step.

Figure 12 shows a boundary is defined for the tooth of interest, where the boundary is at the border between soft tissue and crown.

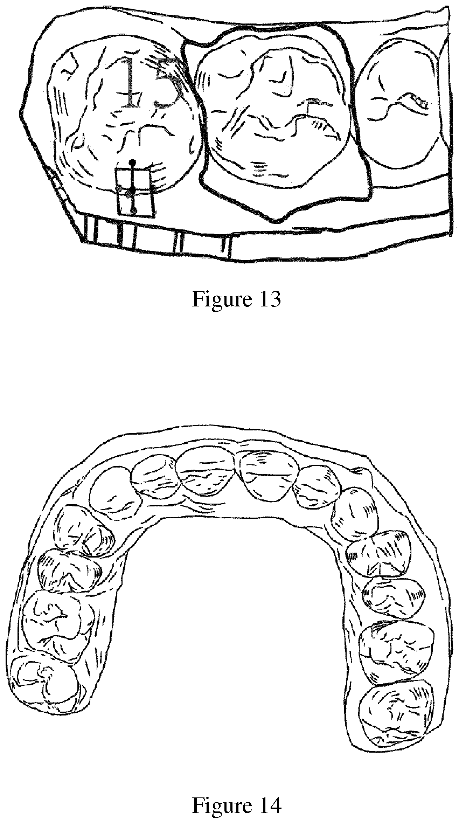

Figure 13 shows a boundary is defined for the tooth of interest, where both the crown and surrounding tissue is included.

After the segmentation of all crown models from the optical scan, the remaining area on the digital model is considered as soft tissue.

At this point, a complete model of the oral dental structure has been established with tooth roots, jaw bones, tooth crowns, soft tissue and articulation. The second stage of the process is to simulate the tooth movements. The uses will determine the tooth movements by various criteria, such as the esthetics of the tooth arrangement, the bite of the jaws, the surrounding bone structure and bone density, and the articulation.

The articulation positions of the jaws can be used to make entire movement of the jaws so that to determine a best target positon of the entire jaw. The user can adjust articulation angles. Individual tooth or tooth groups are then repositioned to simulate the treatment results. Visualization tools will be provided to the users to see how the teeth will be moved.

Each of the teeth or tooth groups can be displayed as a combination of the roots and crowns, or the CT data and optical data. Therefore when a tooth is moved, the system will show how the tooth root is moved accordingly. The movements can be shown in both the CT slices and 3D space. In the CT slices, the users can evaluate the bone density of the surround area of a tooth and to decide the movement is easy or difficult. In the 3D spaces, one can visualize any possible collision of crowns and tooth roots. A feedback tool is used to warn the user if a movement will cause collision.

Figure 14 shows the teeth has been segmented from the model and shown in different colors.

When simulating the tooth movements, the points/surface patches of the tissue model with corresponding tooth numbers are changed. When a tooth is moved, surrounding tissue area will be morphed to follow the movements. The points closed to the tooth boundary will move together with the boundary, and the area farther from with boundary will be moved with smaller distance. The process will ensure the deformation of the soft tissue generally follows the tooth movements smoothly.

The soft tissue morphing is an automatic process. For each point on a tooth boundary, there will be neighboring area or the vertices of the mesh. This is used to represent the surface model. Together those points make a set of candidates for deformation. When a tooth is being moved, all those points will be reclassified with respect to the tooth as "to-be-moved" and "not-to-be-moved". Furthermore, the distances between the points and the booth boundary will be used to calculate how the points will be moved. A Gaussian distribution model is, for example, used to ensure that the "to-be-moved" points' displacement will be between 0 and that of the closest point on tooth boundary, and the 'not-to-be-moved" points will have 0 displacement.

As a result, a deformation of the model is obtained, without creating new topological elements on the model.

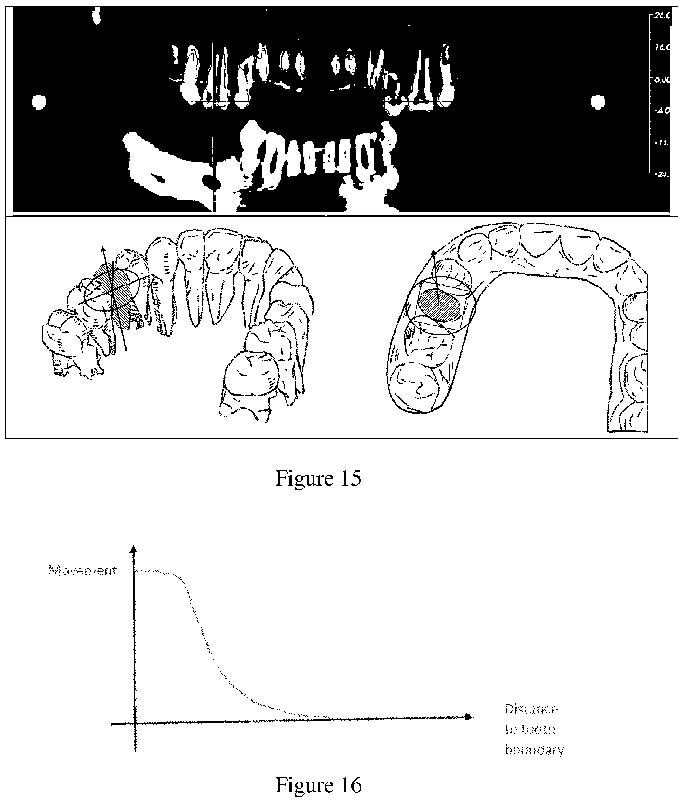

Figure 15 shows a tooth is being moved. In the left side, the tooth, i.e., its crown and root, is moved with a positioning tool. In the right side, the crown is moved and the tissue is morphed.

With all the tooth movements planned, the process now has the final tooth positions of both crowns and roots, the final morphing of the soft tissue. So for each of the teeth or tooth groups the movement can be quantified as three components: the translation, rotation around the long axis or centerline of the tooth, and the inclination on the buccal lingual direction or the mesial distal direction.

A movement plan is now created for all the teeth or tooth groups. The number of total steps to approach all the tooth movement is determined by the maximum translation and rotation of the tooth and the empirical allowed movement in one step, which is typically 0.2 mm and can be adjust by the users based on the bone density and age of the patients. Then the system will interpolate the movements of each tooth linearly or nonlinearly.

There can be various strategies to plan the tooth movements. As a general rule, a few things will be done before, during or after the movement plan:
1. The process will use the final tooth positions to determine if it is necessary to perform interpoximal reduction (IPR), which is the technique to reduce tooth width so to create some space to move teeth. Basically the amount of collisions between the final positons of two adjacent teeth is considered the IPR value. 2. It is necessary to check if there is any collision between the crowns and roots. The collision values if bigger than the planned IPR will be considered invalid. The plan will need to be revised. 3. Reevaluate the tissue morphing for each of the step.

Figure 16 shows a function that is used to define the displacement of a point on tissue area with respect to the distance between the point and the tooth boundary.

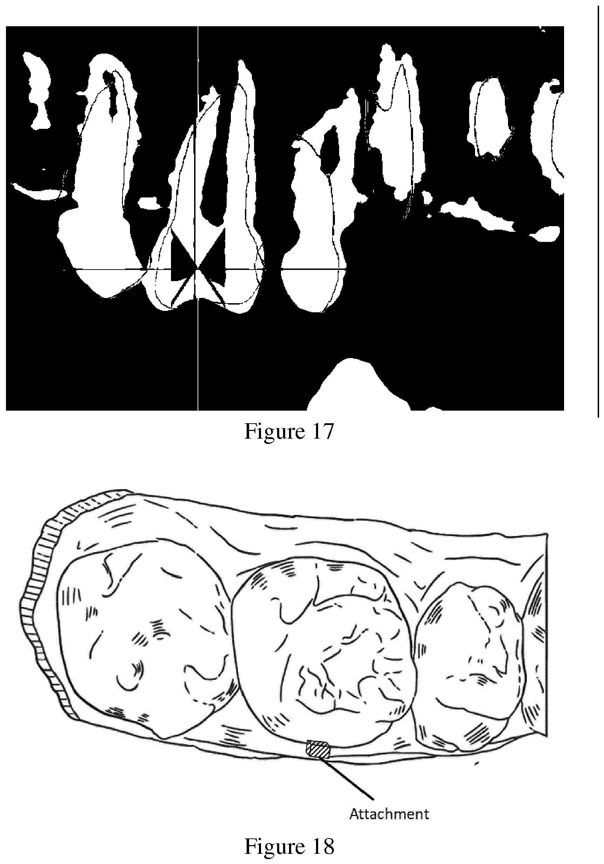

Figure 17 shows the movements of a tooth in a CT slice display.

After all the tooth movements have been planned, the process will generate a series of models to represent each of the steps of the tooth movements. The model for each of the step will be a combination of the movement of crowns and morphed soft tissue. If necessary, the users can create some additional geometric features on the models, which are usually called attachments and can help the movements of teeth. Figure 18 shows an attachment designed to help move the tooth.

There are two approaches to make the final aligners.

The first approach is to create a series of base models and use thermal forming technique to create aligners, which are shells that can fit onto the models. The series models will be output as a digital file format, which can then be send to a 3D printer, a rapid prototyping machine, CNC or any other equipment that can make physical models from digital files.

Each of the base model can be placed onto a thermal forming machine, which will heat and suck down a plastics film to the model and thus create a shell model. This shell model's inner surfaces represent not only the target positions of the tooth surfaces for the corresponding step, but also possible tissue morphing. One may trim the model to tooth boundary or to include some tissue area. The result is the aligner for one treatment step.

When the shell model for step N+1 is applied onto the base model of step N, the shape difference between the inner surfaces of the shell and outer surface of the base will cause forces onto the model, and therefore will be able to move actual teeth at that step.

Because the shape difference between the shell model of the base model produce the force to move the teeth, any further deformation to base model can lead to additional shape differences on the shell model, and thus produce additional forces in the treatment.

Therefore an embodiment to the process is to provide a software tool to modify the base model before making the aligners with thermal forming. For example, a local deformation operation that can create a small dent on the model will lead to an inward bump on the aligner model, which can lead to additional force to push tooth along the direction of the bump.

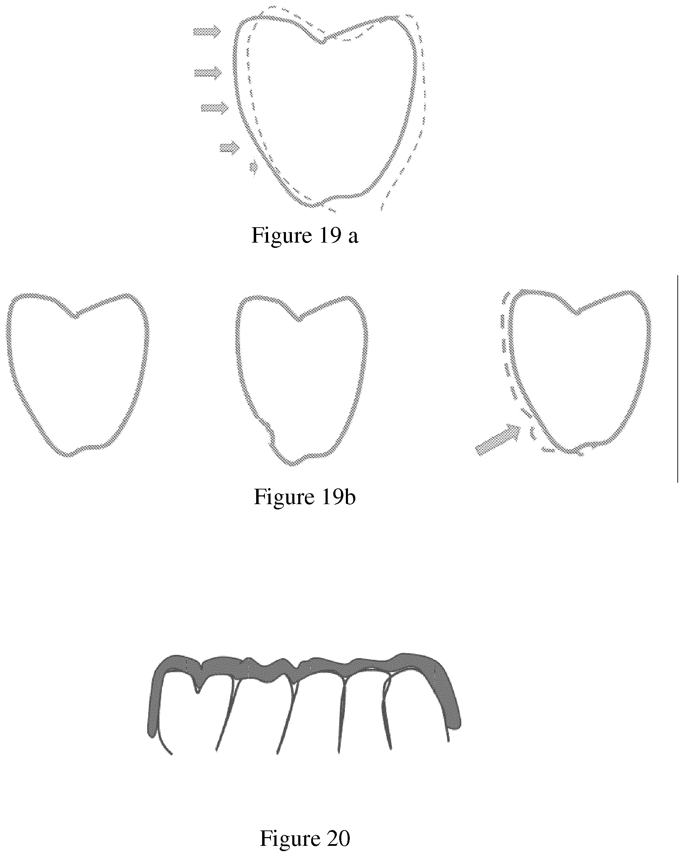

In figure 19a, the dotted line indicates the shell model, or aligner, the solid line indicates the tooth underneath the aligner. The deviation of the surfaces create forces to move the tooth as indicated by the arrows. Figure 19b shows an original tooth model, a tooth model with local deformation, an aligner made with this deformed model is applied onto the actual tooth, and thus the bump area creates additional force to move the tooth.

The second approach is to directly design a shell model for each of the steps of the base model. The system provides a tool for the user to specify an area, where the shell model will cover, or simply use the collection of the crown surfaces. The area is extracted and thickened to make an aligner. The final shell model will match most of the contour of the tooth surfaces and attachment, but may not reflect all the geometric details and is not necessary to do so.

Figure 20 shows that the aligner's geometry is not exact match of the combination of the teeth.

Same to the first approach, software tools are provided to the users to deform the base model before shell generation or to deform the shell model after it is created. The shell models are further sent to a manufacturing equipment to make the final aligners.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for facilitating a tooth repositioning dental treatment comprising:
receiving a CT scan of a patient's oral dental structure,
receiving an optical scan of the patient's oral dental structure,
aligning the CT scan and the optical scan,
establishing an initial model of the patient's oral dental structure based on the CT scan and the optical scan,
simulating tooth movements to produce a final model of the patient's oral dental structure after the tooth repositioning dental treatment,
generating a plurality of models of the patient's oral dental structure representing successive tooth movements from the initial model to the final model, and
preparing dental aligners based on the plurality of models of the patient's oral dental structure,
where the CT scan of the patient's oral dental structure is in a first jaw opening angle, the optical scan of the patient's oral dental structure is in a second jaw opening angle.

2. The method of claim 1, further comprising:
segmenting tooth data from the CT scan to obtain a segmented CT scan,
wherein the segmented CT scan includes tooth crown data and tooth root data.

3. The method of claim 2, further comprising:
segmenting crown data from the optical scan to obtain a segmented optical scan,
wherein the segmented optical scan includes soft tissue data.

4. The method of claim 3, wherein the establishing initial model of the patient's oral dental structure is based on the segmented CT scan and the segmented optical scan.

5. The method of claim 1, wherein the difference between the first jaw opening angle and the second jaw opening angle is 1 degree or more.

6. The method of claim 1, further comprising:
creating a virtual articulation based on the CT scan, the optical scan, or both,
wherein the simulating tooth movements is based on the adjustment of the virtual articulation and individual tooth movement.

7. The method of claim 6, further comprising:
generating an axis of a temporomandibular joint of the patient's oral dental structure from the CT scan, the optical scan, or both, and
applying the axis in creating the virtual articulation.

8. The method of claim 1, further comprising:
segmenting tooth data from the CT scan to obtain a segmented CT scan,
segmenting crown data from the optical scan to obtain a segmented optical scan, and
creating a virtual articulation based on the segmented CT scan and the segment optical scan,
wherein the segmented CT scan includes tooth crown data and tooth root data,
wherein the segmented optical scan includes soft tissue data,
wherein the establishing initial model of the patient's oral dental structure is based on the segmented CT scan, the segmented optical scan, or both, and
wherein the simulating tooth movements is based on the adjustment of the virtual articulation and individual tooth movement.

9. The method of claim 1, wherein both the CT scan and the optical scan are displayed both in 3D images and 2D images, the 3D images and 2D images include area of jaw bone data surrounding the teeth, and the tooth repositioning dental treatment is evaluated against the area of jaw bone data surrounding the teeth.

10. The method of claim 1, wherein a plurality of teeth are considered and moved as a single entity in the tooth repositioning dental treatment.

11. A method for facilitating a tooth repositioning dental treatment comprising:
receiving a scan of a patient's oral dental structure in a first jaw opening angle,
receiving a scan of a patient's oral dental structure in a second jaw opening angle,
aligning the scan of the first jaw opening angle and the scan of the second jaw opening angle,
establishing an initial model of the patient's oral dental structure based on the scan of the first jaw opening angle and the optical scan of the second jaw opening angle,
simulating tooth movements to produce a final model of the patient's oral dental structure after the tooth repositioning dental treatment,
generating a plurality of models of the patient's oral dental structure representing successive tooth movements from the initial model to the final model, and
preparing dental aligners based on the plurality of models of the patient's oral dental structure,
wherein the difference between the first jaw opening angle and the second jaw opening angle is 1 degree or more.

12. The method of claim 11, further comprising:
segmenting tooth data from the scan of the first jaw opening angle to obtain a segmented scan of the first jaw opening angle, and
segmenting crown data from the scan of the second jaw opening angle to obtain a segmented scan of the second jaw opening angle.

13. The method of claim 12, wherein the establishing initial model of the patient's oral dental structure is based on the segmented scan of the first jaw opening angle, the segmented scan of the second jaw opening angle, or both.

14. The method of claim 11, further comprising:
creating a virtual articulation based on the scan of the first jaw opening angle, the scan of second jaw opening angle, or both,
wherein the simulating tooth movements is based on the adjustment of the virtual articulation and individual tooth movement.

15. The method of claim 14, further comprising:
generating an axis of a temporomandibular joint of the patient's oral dental structure from the scan of the first jaw opening angle, the scan of the second jaw opening angle, or both, and
applying the axis in creating the virtual articulation.

16. The method of claim 11, wherein the scan of the patient's oral dental structure is a CT scan or an optical scan.

17. A computer readable storage medium having stored a computer program, **characterized in that** the program is implemented by the processor to implement the steps of any one of claims 1-10 or any one of claims 11-16.

## Amended claims

### Amended claims in accordance with Rule 137(2) EPC.

1. A method for facilitating a tooth repositioning dental treatment comprising:
receiving a CT scan of a patient's oral dental structure in a first jaw opening angle,
receiving an optical scan of the patient's oral dental structure in a second jaw opening angle,
aligning the CT scan in the first jaw opening angle and the optical scan in the second jaw opening angle,
establishing an initial model of the patient's oral dental structure based on the CT scan and the optical scan, where the initial model of the patient's oral dental structure includes
a) separated models of bones, crowns, roots, soft tissue from the optical scan and CT scans, and
b) a virtual articulation based on the CT scan, the optical scan and the jaw opening angles,
simulating tooth movements to produce a final model of the patient's oral dental structure after the tooth repositioning dental treatment, wherein the simulation of tooth movements is based on the adjustment of the virtual articulation and individual tooth movements,
generating a plurality of models of the patient's oral dental structure, a combination of crowns and morphed soft tissue models, representing successive tooth movements from the initial model to the final model, and
preparing dental aligners based on the plurality of models of the patient's oral dental structure.

2. The method of claim 1, further comprising:
segmenting tooth data from the CT scan to obtain a segmented CT scan,
wherein the segmented CT scan includes tooth crown data and tooth root data.

3. The method of claim 2, further comprising:
segmenting crown data from the optical scan to obtain a segmented optical scan,
wherein the segmented optical scan includes soft tissue data.

4. The method of claim 3, wherein the establishing initial model of the patient's oral dental structure is based on the segmented CT scan and the segmented optical scan.

5. The method of claim 1, wherein the difference between the first jaw opening angle and the second jaw opening angle is 1 degree or more.

6. The method of claim 1, further comprising:
creating a virtual articulation based on the CT scan at one jaw opening angle, and the optical scan at another jaw opening angle,
adjusting articulation angles to make entire movement of the jaws so as to determine a best target position of the jaws, and
repositioning individual tooth or tooth groups to simulate the treatment results.

7. The method of claim 6, further comprising:
generating an axis of a temporomandibular joint of the patient's oral dental structure from the CT scan at one jaw opening angle, the optical scan at another jaw opening angle and
applying the axis in creating the virtual articulation.

8. The method of claim 1, further comprising:
segmenting tooth data from the CT scan to obtain a segmented CT scan,
segmenting crown data from the optical scan to obtain a segmented optical scan, and
creating a virtual articulation based on the segmented CT scan and the segment optical scan,
wherein the segmented CT scan includes tooth crown data and tooth root data,
wherein the segmented optical scan includes soft tissue data,
wherein the establishing initial model of the patient's oral dental structure is based on the segmented CT scan, the segmented optical scan, or both, and
wherein the simulating tooth movements is based on the adjustment of the virtual articulation and individual tooth movement.

9. The method of claim 1, wherein both the CT scan and the optical scan are displayed both in 3D images and 2D images, the 3D images and 2D images include area of jaw bone data surrounding the teeth, and the tooth repositioning dental treatment is evaluated against the area of jaw bone data surrounding the teeth.

10. The method of claim 1, wherein a plurality of teeth are considered and moved as a single entity in the tooth repositioning dental treatment.

11. The method of claim 1, further comprising:
segmenting tooth data from the optical scan to obtain segmented optical scan, wherein a user will just specify points surrounding two crown boundary and a system will connect the points as a loop with the edges on the triangulated model and select the area inside the loop as the crown model of underlying tooth/teeth.

12. The method of claim 11, wherein the separation of the crowns from optical data includes segmenting crown area only, or includes segmenting crown area and some surrounding soft tissue, when 1) the models or the optical scans do not produce a clear boundary of the crowns, or 2) the users determine that it is helpful to move some tissue around together with the crowns.

13. The method of claim 12, wherein as a tooth is moved, surrounding tissue area will be morphed to follow the movements, all points on the tissue model will be reclassified with respect to the tooth as "to-be-moved" and "not-to-be-moved", and the distances between the points and the booth boundary will be used to calculate how the points will be moved, whereby a deformation of the model is obtained, without creating new topological elements on the model.

14. The method of claim 1, wherein final tooth positions will be evaluated and used to determine if it is necessary to perform interproximal reduction (IPR), which is the technique to reduce tooth width so to create some space to move teeth, the amount of collisions between the final positions of two adjacent teeth is considered the IPR value, if the collision values are bigger than the planned IPR or allowed IPR, the plan will need to be revised and the soft tissue morphing for each of the step will be also reevaluated.

15. The method of claim 1, further comprising a software tool to modify the base model before making the aligners with thermal forming, which can lead to additional force to push tooth along the direction of the model modification.

16. The method of claim 1, wherein an area on a find oral dental structure model is specified, so that a shell model of an aligner will cover, or the collection of the crown surfaces are simply used as the area, and the area is extracted and thickened to make an aligner.
